# EUROPEAN PATENT SPECIFICATION

(11) **EP 4 385 699 B1**
(45) Date of publication and mention of the grant of the patent: **26.03.2025**
(21) Application number: 23209546.3
(22) Date of filing: 13.11.2023
(51) Int. Cl.: B29B 11/16

(54) **PI-SHAPED PREFORM AND BONDED JOINTS THEREOF**
PI-FÖRMIGE VORFORM UND KLEBEVERBINDUNGEN DAVON
PRÉFORME EN PI ET SES JOINTS COLLÉS

(30) Priority: 14.12.2022 US 202218065850
(43) Date of publication of application: 19.06.2024
(73) Proprietor: Lockheed Martin Corporation, Bethesda, Maryland 20817 (US)
(72) Inventor: KOON, Robert Warner, AcWorth, 30101 (US); NGUYEN, Felix Nhanchau, Parker, 80134 (US); HECHT, Daniel H., Fort Worth, 76018 (US); ROUSSEAU, Carl Q., Weatherfield, 76085 (US)
(74) Representative: Barker Brettell LLP

(56) References cited:
- CA-A- 922 473
- US-A1- 2014 184 044
- US-B2- 7 905 975

## Description

### TECHNICAL FIELD

This disclosure relates in general to structural supports that join similar or dissimilar materials, and more particularly to pi-shaped preforms and bonded joints thereof.

### BACKGROUND

Integrated composite structures are recognized as promising materials for reducing aircraft structure weight and manufacturing cost. 3D woven pi-preforms currently provide a baseline method for achieving robust adhesively bonded joints in composite aircraft structures. However, the cost of 3D woven pi-preforms is prohibitive for numerous applications that would benefit from high performance adhesive joints. US7905975 discloses a pi-shaped preform constructed from reinforcing fiber cloths comprising unidirectional continuous fibers.

### SUMMARY OF THE DISCLOSURE

The systems and methods of the present disclosure provide several technical advantages over previous pi-shaped preform technology, which include (i) reduced manufacturing cost compared to 3D woven pi-preforms; (ii) improved shear strength (e.g., embodiments of the pi-shaped preform provided herein demonstrate ~220% shear strength of the baseline 3D pi-preforms); and (iii) excellent formability caused, in part, by the discontinuous, aligned fibers in the prepreg that allows for creation of complex shaping of the pi-shaped preforms while maintaining mechanical properties (e.g., improve shear strength and comparative pull-off strength).

According to one embodiment, the present disclosure provides a pi-shaped preform comprising a base component and a pair of axially elongated legs coupled to the base component to define a channel between the axially elongated legs. The pair of axially elongated legs comprising plies of prepreg oriented in a ply stack, and at least a portion of the prepreg comprises discontinuous, aligned fibers, wherein individual plies of prepreg oriented in the ply stack at an angle of 0 degrees or 90 degrees relative to a first axis comprise continuous, aligned fibers, and individual plies of prepreg oriented in the ply stack at an angle other than 0 degrees or 90 degrees relative to the first axis comprise discontinuous, aligned fibers.

According to another embodiment, the present disclosure provides a pi-joint assembly comprising the above pi-shaped preform. The pi-joint comprises a first material, e.g. in the form of a skin, coupled to the base component, and a second material, e.g. in the form of a web, coupled to an inner surface of the channel between the axially elongated legs.

According to one embodiment, the present disclosure provides a method of manufacturing a pi-shaped preform. The method comprises laying plies of prepreg for a base component and a pair of axially elongated legs, and thermal forming the plies of prepreg in a shape of the base component and the pair of axially elongated legs, and bonding the pair of axially elongated legs to the base component to form the pi-shaped preform. At least a portion of the prepreg comprises discontinuous, aligned fibers, wherein individual plies of prepreg oriented in the ply stack at an angle of 0 degrees or 90 degrees relative to a first axis comprise continuous, aligned fibers, and individual plies of prepreg oriented in the ply stack at an angle other than 0 degrees or 90 degrees relative to the first axis comprise discontinuous, aligned fibers.

Other technical advantages will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present disclosure and its advantages, reference is now made to the following description, taken in conjunction with the accompanying drawings, in which:
FIGURE 1 illustrates a pi-shaped preform, according to certain embodiments;
FIGURE 2 illustrates an individual ply of the pi-shaped preform of FIGURE 1, according to certain embodiments;
FIGURE 3 illustrates a ply stack of the pi-shaped preform of FIGURE 1, according to certain embodiments;
FIGURE 4 illustrates a pi-joint assembly, according to certain embodiments; and
FIGURE 5 illustrates a flow chart for a method of manufacturing a pi-shaped preform, according to certain embodiments.

### DETAILED DESCRIPTION OF THE DISCLOSURE

3D woven pi-preforms are currently used for achieving adhesively bonded joints in composite aircraft structures. The cost of 3D woven pi preforms is prohibitive for a number of applications that would benefit from high performance adhesive joints. To address these and other challenges associated with typical 3D woven pi-preforms, the disclosed embodiments provide a pi-shaped preform that is a low-cost alternative to 3D woven pi-preforms, with minimal to no performance sacrifice or even higher performance. The provided pi-shaped preforms of the present disclosure therefore allow the use of pi-joint configurations on a broader range of applications within composite designs.

To facilitate a better understanding of the present disclosure, the following examples of certain embodiments are given. In no way should the following examples be read to limit, or define, the scope of the disclosure. Embodiments of the present disclosure and its advantages may be best understood by referring to the included FIGURES, where like numbers are used to indicate like and corresponding parts.

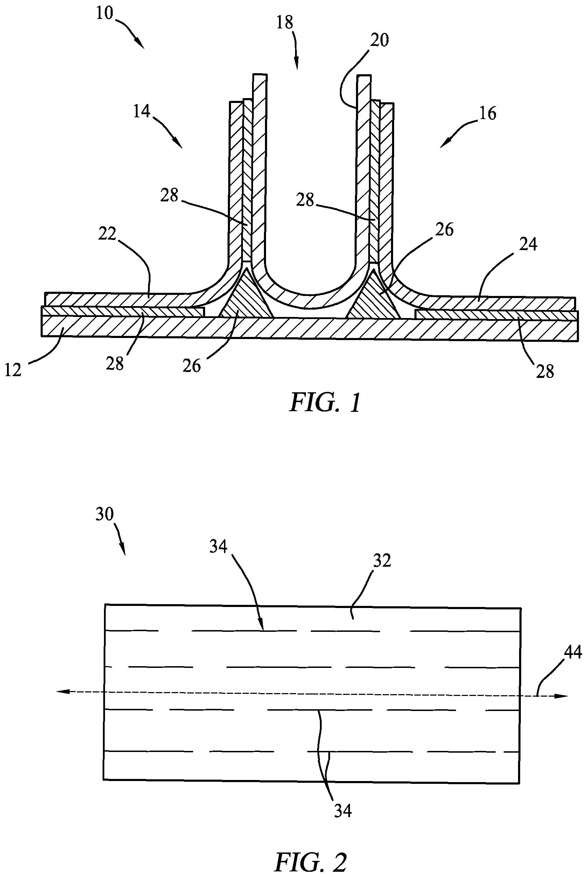

FIGURE 1 is a schematic illustration of a pi-shaped preform element or "preform" 10 according to an embodiment of the present disclosure. When viewed in cross-section, the preform 10 resembles an inverted Greek letter π or "pi" having a base component 12 and a pair of axially extending legs 14, 16 coupled to the base component 12. The pair of axially extending legs 14, 16 may be perpendicular to the base component 12 or angled to fit the structure. A channel 18 is defined between the axially elongated legs 14, 16. In some embodiments, the channel 18 is a clevis joint.

In some embodiments, the pi-shaped preform 10 is a composite material that may be formed by various components. For example, the axially elongated legs 14, 16 may be formed by coupling a U-shaped component 20 to a first L-shaped component 22 and a second L-shaped component 24 positioned opposite the first L-shaped component 22. A filler 26 is positioned in a first space formed between the U-shaped component 20 and the first L-shaped component 22, and the filler 26 is positioned a second space formed between the U-shaped component 20 and the second L-shaped component 24. In some embodiments, an optional adhesive 28 is positioned between the various components to directly or indirectly couple them together. For example, the adhesive 28 may be positioned between: (i) the U-shaped component 20 and the first L-shaped component 22; (ii) the U-shaped component 20 and the second L-shaped component; (iii) the first L-shaped component 22 and the base component 12; and (iv) the second L-shaped component and the base component 12 to couple the respective components together. The adhesive 28 may also be positioned between the U-shaped component 20 and the filler 26.

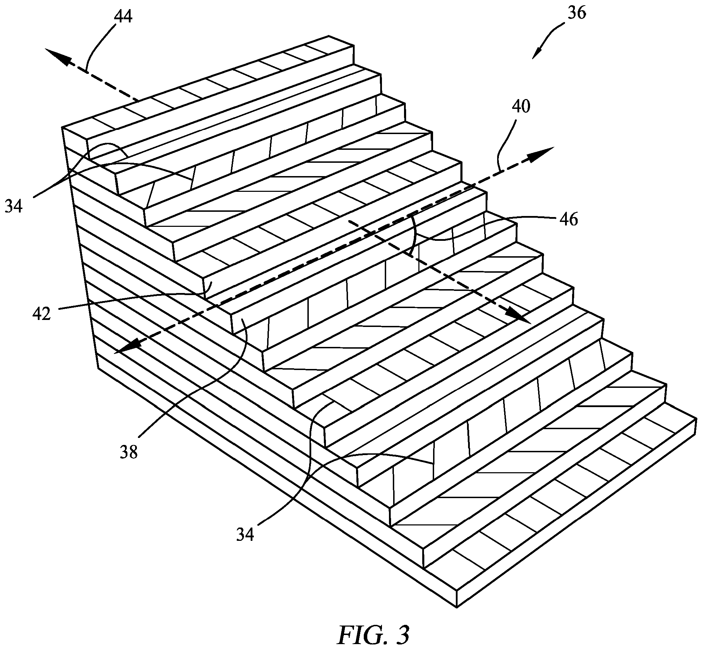

In some embodiments, the pi-shaped preform 10 includes plies of prepreg 30 oriented in a ply stack. FIGURE 2 is a schematic illustration of an individual ply of prepreg 30, and FIGURE 3 is a schematic illustration of plies of prepreg 30 oriented in a ply stack. In some embodiments, the base component 12 and the pair of axially elongated legs 14, 16 each include plies of prepreg 30. For example, the U-shaped component 20, the first L-shaped component 22, and the second L-shaped component 24 in the axially elongated legs 14, 16 may each include plies of prepreg 30 arranged in a respective ply stack 36.

By enabling the Pi preforms to be composed of discrete plies of aligned fiber composite, the ply orientations and volumes can be easily and cost effectively tailored to meet the mechanical requirements of each bond application. Current 3D woven Pi preforms cannot be quickly or cost effectively altered to meet specific mechanical requirements.

In some embodiments, the plies of prepreg 30 comprise a polymeric matrix 32. In some embodiments, the prepreg 30 comprises from 10% to 60% (w/w) of a polymeric matrix 32, based on the total weight of the prepreg 30. In some embodiments, the prepreg 30 comprises at least 10%, at least 20%, at least 25%, at least 30% to less than 35%, less than 40%, less than 45%, less than 50%, less than 55%, or less than 60% (w/w), based on the total weight of the prepreg 30. In some embodiments, the polymeric matrix 32 comprises a thermoplastic resin, a thermoset resin, or combinations thereof.

Suitable thermoplastic resins include, but are not limited to, polyacrylic acid, polyacrylic ester, poly(methyl methacrylate), acrylonitrile butadiene styrene polymer, polyamide, polylactic acid, polybenzimidazole, polycarbonate, polyether sulfone, polyoxymethylene, polyether ether ketone, polyaryletherketone, polyetherimide, polyethylene, polyphenylene oxide, polyphenylene sulfide, polypropylene, polystyrene, polyvinyl chloride, polyvinylidene fluoride, polytetrafluoroethylene, or combinations thereof. In some embodiments, the thermoplastic is a commercial polymer or an oligomer having a lower molecular weight than a commercial polymer.

Suitable thermoset resins include, but are not limited to, polyester, polyurethane, polyurea, vulcanized rubber, phenol-formaldehyde polymers, melamine polymer, bismaleimide polymer (BMI resin), polyepoxide (epoxy resin), polybenzoxazine, polyimide, polycyanurate, polyfuran, polysilicone, polyphenol, polyvinyl ester, polythiolyte, or combinations thereof. In some embodiments, the thermoset is a commercial polymer or an oligomer having a lower molecular weight than a commercial polymer.

In some embodiments, the prepreg 30 includes a hardener. In some embodiments, the prepreg 30 includes from 0.1% to 15% (w/w) of a hardener or crosslinker agent, based on the total weight of the prepreg 30. In some embodiments, the prepreg 30 includes at least 0.1% of the hardener, or at least 1%, at least 2%, at least 3%, at least 4%, or at least 5% to less than 10%, less than 11%, less than 12%, less than 13%, less than 14%, or less than 15% (w/w) of the hardener, based on the total weight of the prepreg 30.

Suitable hardeners include, but are not limited to, polyethylene tetraamine, dicyandiamide, phenylene diamine (particularly the meta-isomer), bis(4-amino-3,5-dimethylphenyl)-1,4-diisopropylbenzene,bis(4-amino-phenyl)1,4-diiospropylbenzene, diethyl toluene diamine, methylene dianiline, mixtures of methylene dianiline and polymethylene polyaniline compounds, diaminodiphenylsulfone, phenolic hardeners, or combinations thereof.

In some embodiments, the prepreg 30 includes an additive. In some embodiments, the prepreg 30 comprises from 0.1% to 50% (w/w) of an additive, based on a total weight of the prepreg 30. In some embodiments, the prepreg 30 includes at least 0.1% (w/w) of the additive, or at least 1%, at least 2%, at least 3%, at least 4%, or at least 5% to less than 10%, less than 15%, less than 20%, less than 25%, less than 30%, less than 40%, or less than 50% (w/w) of the additive, based on the total weight of the prepreg 30.

Exemplary additives include fillers, accelerators, or combinations thereof. Suitable fillers include, but are not limited to, calcium carbonate, kaolin, magnesium hydroxide, wollastonite, silica, carbon black, fly ash, nanofillers (e.g., carbon nanotubes, graphene), polymer foam beads, carboxylated rubbers or combinations thereof. Suitable accelerators include, but are not limited to, 3-phenyl-1,1-dimethyl urea, 3-(3-chlorophenyl)-1,1,-dimethyl urea, 3-(3,4-dichlorophenyl)-1,1-dimethyl urea, 2,4-toluene bisdimethyl urea, 2,6-toluene bisdimethyl urea, or combinations thereof.

The formation of complex shapes (e.g., L-shaped components and U-shaped components) in pi-shaped preform using continuous fiber composite materials is difficult without excessive defects such as ply wrinkling occurring during the forming process. Such defects lead to unacceptable mechanical performance in the pi-shaped preform 10. Referring to FIG. 2, the prepreg 30 includes discontinuous, aligned fibers 34 embedded therein. As used herein, the term "discontinuous" refers to fibers 34 in the prepreg 30 that include at least one gap or interval as the fiber 34 extends along an axis 44 in the prepreg 30. In some embodiments, the fibers 34 are aligned at an angle of less than 5 degrees from the axis 44 in the individual prepreg 30, or at an angle of less than 4 degrees, less than 3 degrees, less than 2 degrees, less than 1 degree, or less than 0.5 degrees from the axis 44 in the individual prepreg 30.

In some embodiments, the prepreg 30 comprises from 30% to 85% (w/w) of discontinuous, aligned fibers 34, based on the total weight of the prepreg 30. In some embodiments, the prepreg 30 comprises at least 30% (w/w) of discontinuous, aligned fibers 34, or at least 35%, at least 40%, at least 45%, at least 50%, at least 55% to less than 60%, less than 65%, less than 70%, less than 75%, less than 80%, or less than 85% (w/w) of the discontinuous, aligned fibers 34. Suitable discontinuous, aligned fibers 34 include, but are not limited to, carbon fibers, glass fibers, aramid fibers, graphite fibers, boron fibers, or combinations thereof. In some embodiments the discontinuous, aligned fibers 34 have a nominal fiber length of at least 0,635 cm (0.25 inches), at least 1,27 cm (0.5 inches), at least 2,54 cm (1 inch), at least 3,81 cm (1.5 inches), at least 5,08 cm (2 inches) to less than 6,35 cm (2.5 inches), less than 7,62 cm (3 inches), less than 8,89 cm (3.5 inches) or less than 10,6 cm (4 inches). In some embodiments, the discontinuous, aligned fibers 34 have about the same nominal fiber length (e.g., nominal fiber length for each of the discontinuous, aligned is within 0.1% to 10% of the nominal fiber length).

Referring to FIGURE 3, the plies of prepreg 30 may be arranged in a ply stack 36. The ply stack 36 includes a layup of individual plies of prepreg 30. In some embodiments, the plies of prepreg 30 may be stacked such that the orientation of the discontinuous, aligned fibers 34 differs between adjacent plies of prepreg 30 in the ply stack 36. For example, discontinuous, aligned fibers 34 in a first prepreg 38 may be aligned along a first axis 40, while the discontinuous, aligned fibers 34 in a second prepreg 42 adjacent to the first prepreg 38 may be aligned along a second axis 44. The second axis 44 may be positioned at an angle 46 to the first axis 40. The angle 46 may be any angle, but in some exemplary embodiments, the angle 46 is ±30 degrees, ±45 degrees, ±60 degrees, or ±90 degrees.

In some embodiments, the plies of prepreg 30 are arranged in a ply sequence within the ply stack 36. As used herein, the term "ply sequence" refers to a stack arrangement for the plies of prepreg 30 that is repeated throughout at least a portion of the ply stack 36 or throughout the entire ply stack 36. The ply sequence may be selected based on the desired structural properties of the pi-shaped preform 10. In one non-limiting example, the plies of prepreg 30 for base component 12 or the axially elongated legs 14, 16 may be arranged in a ply sequence selected from [45/0/-45/90]s or [0/45/-45/0/-45/45/90/45/-45/0/-45/45/0]t, where 0 refers to discontinuous, aligned fibers 34 that are oriented to align with the first axis 40. The ability to tailor the ply sequence, in this way, to achieve desired anisotropic performance in the overall pi-shaped preform 10 provides superior mechanical performance as compared to current 3D woven pi-preforms.

As discussed above, the discontinuous, aligned fibers 34 offer a combination of formability and performance to achieve complex pi-shaped geometries. In addition, ply stacks 36 and specific layups can be tailored to drive pi-shaped preform 10 performance, while reducing the cost compared to conventional technologies. In some embodiments, each of the individual plies of prepreg 30 in the ply stack 36 comprise discontinuous, aligned fibers 34. However, for some applications, it may be desirable to increase the strength of the pi-shaped preform 10. Accordingly, in some embodiments, at least a portion of the individual plies of prepreg 30 in the ply stack 36 may include continuous, aligned fibers. As used herein, the term "continuous" refers to a fiber 34 that extends the entire length of the prepreg 30 without gaps or intervals, or fibers 34 that extend at least 90%, or at least 95%, or at least 99% the length of the prepreg 30 without gaps or intervals. In some embodiments, individual plies of prepreg 30 oriented in the ply stack 36 at an angle of 0 degrees, 90 degrees, or 180 degrees relative to the first axis 40 comprise continuous, aligned fibers, while individual plies of prepreg 30 oriented in the ply stack at an angle other than 0 degrees, 90 degrees, or 180 degrees relative to the first axis 40 comprise discontinuous, aligned fibers 34.

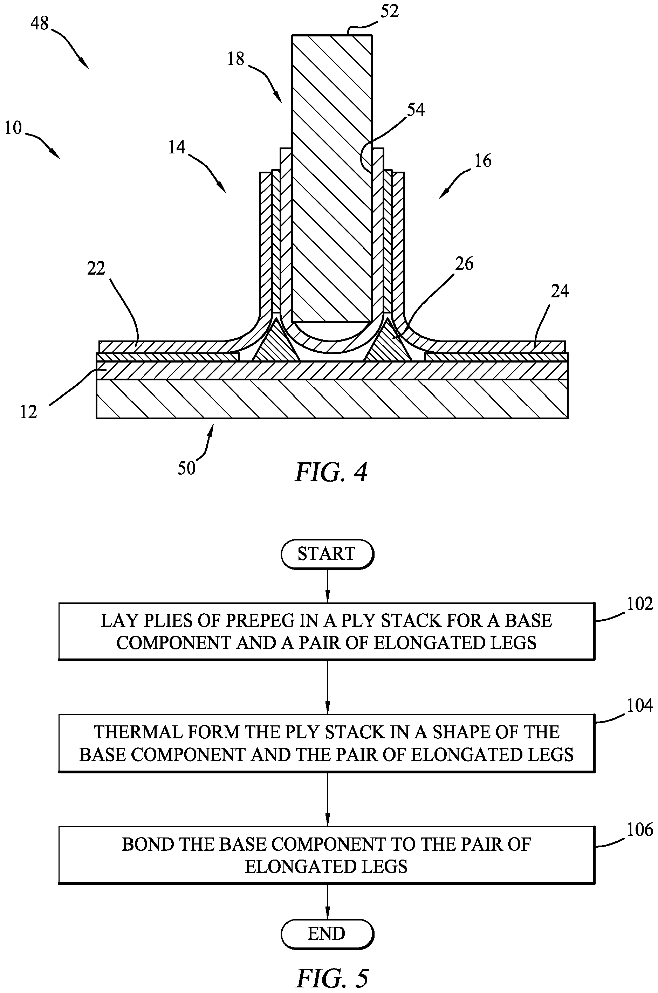

FIGURE 4 illustrates a pi-joint assembly 48 according to some embodiments of the present disclosure. The pi-joint assembly 48 includes a pi-shaped preform 10 having the same components as described in FIGURES 1-3. The pi-shaped preform 10 may be used to join a first material 50 to a second material 52. In some embodiments, the first material 50 is a skin of an aircraft and the second material 52 is a web of an aircraft. In some embodiments, the first and second material 50, 52 may be metallic or composite materials. The first material 50 may be coupled to the base component 12 of the pi-shaped preform 10, and the second material 52 may be coupled to an inner surface 54 of the channel 18 between the axially elongated legs 14, 16. In some embodiments, an optional adhesive 28 (not shown in FIG. 4) couples the first material 50 to the base component 12 and the second material 52 to the axially elongated legs 14, 16.

In some embodiments, the first material 50 is a thermoset composite material, where the thermoset composite material may be uncured, partially cured or fully cured. In some embodiments, the second material 52 is a thermoset composite material, where the thermoset composite material may be uncured, partially cured or fully cured. In some embodiments, the first material 50 is a thermoset composite material and the second material 52 is a thermoset composite material comprising the same or different resin and the same or different fiber from those of the first material, whereas one or both the thermoset composite materials may be uncured, partially cured or fully cured. At the fully cured state the thermoset composite materials may reach maximum glass transition temperatures.

FIGURE 5 illustrates a method 100 for manufacturing a pi-shaped preform 10. The method 100 may begin at operation 102 which includes laying plies of prepreg 30 in a ply stack 36 for the base component 12 and the pair of axially elongated legs 14, 16. In some embodiments, operation 102 may also include laying plies of prepreg 30 in a ply stack for the U-shaped component 20, the first L-shaped component 22, and the second L-shaped component 24. Materials used to form the filler 26 are cut to size.

At operation 104, the method 100 includes consolidation and thermal forming the plies of prepreg 30 in a shape of the base component 12 and the pair of axially elongated legs 14, 16. For example, operation 104 may include thermal forming the plies of prepreg 30 in a shape of the U-shaped component 20, the first L-shaped component 22, and the second L-shaped component 24. Thermal forming may include heating the plies of prepreg 30 to a thermal profile suitable for shearing the polymeric matrix 32 to create structural shapes and may advance chemical bonds that integrally link the plies of prepreg 30 together. Boundary tooling (e.g., molded shapes of silicone rubber, metal, or other materials) may be used as templates to shape the ply stack 36 into the desired shape of the base component 12 and the pair of axially elongated legs 14, 16. Operation 104 may further include placing the plies of prepreg 30 under pressure or vacuum to conform the plies of prepreg 30 to the shape of the boundary tooling. Specialized tooling is used to consolidate the ply stack and achieve sharp corners without the formation of wrinkles in the final preform. Operation 104 may include forming of the filler 26 in a shape as shown in FIG. 1 using thermal forming and tooling.

At operation 106, the method 100 includes bonding the pair of axially elongated legs 14, 16 to the base component 12 to form the pi-shaped preform 10. For example, operation 106 may include positioning a filler 26 in a first space between the pair of axially elongated legs 14, 16 and the base component. In some embodiments, operation 106 may include positioning the filler 26 in a first space between the U-shaped component 20 and the first L-shaped component 22, and a filler 26 in a second space between the U-shaped component 20 and the second L-shaped component 24. Operation 106 may further include bonding the first L-shaped component 22, the U-shaped component 20, the second L-shaped component 24, and the base component 12 to form the pi-shaped preform 10. In some embodiments, the method 100 further includes manufacturing a pi-joint assembly 48 by bonding the first material 50 to the base component 12, and the second material 52 to an inner surface 54 of the channel 18. Bonding may include curing composite or specifically an adhesive that is positioned between the aforementioned components. Curing the composite or the adhesive may be performed through any curing method, such as light curing or heat curing.

The following examples are provided to illustrate the invention but are not intended to limited the scope thereof.

### Example 1 and Comparative Sample A

### Example 1: Pi-shaped preform

Torayca Prepreg T800/3900-2 in discontinuous ET-40 form was used to make a base component, a first L-shaped component, the second L-shaped component, and a U-shaped component. The base component included thirteen plies of prepreg arranged in a [0/45/-45/0/-45/45/90/45/-45/0/-45/45/0]t ply sequence. The first and second L-shaped component included eight plies of prepreg arranged in a [45/0/- 45/90]s ply sequence. The U shaped component included eight plies of prepreg arranged in a [45/0/-45/90]s. Sub-component stack plies widths were reduced every two plies to create a tapered edge. The filler is composed of an axially aligned ply of T800/3900-2 prepreg, cut to width to form the proper volume, rolled, and formed to the shape of filler with round tools on a flat plate at approximately 60 degrees centigrade. The first space positioned between the first L-shaped component and the U-shaped component includes the filler, and the second space positioned between the second L-shaped component and the U-shaped component includes the filler. The sub-assembly is centered on a base, tooling is inserted into the channel and outside the L-shaped components, bagged and de-bulked and final formed into the pi-joint assembly.

A pi-joint assembly was assembled using the pi-shaped preform along with a composite skin and web laminate composed of Solvay IM7-977-3 epoxy resin prepreg that was assembled and cured. The 0,49 cm (0.193 inch) thick, fabric reinforced web panel and the 0,675 cm (0.266 inch) thick, uni-tape with fabric outer ply reinforced skin utilized a quasi-isotropic prepreg stack sequence with outer peel plies of glass fabric/ 977-3 epoxy. Cured panels were cut to 17,78 cm (7") wide and 93,98 cm (37 inch) length (web) and 91,44 cm (36 inch) length (skin). The web edge to be bonded was rounded slightly to better match the clevis geometry of the pi-shaped preform. 10,16 cm (4 inch) by 91,44 cm (36 inch) strips of 3M AF191 3,83 Pascal (0.08 pound/square foot) adhesive with a knitted carrier were cut to cover the interior clevis and bottom base surfaces with excess width to supply excess adhesive to the joint end of part areas. The pi-shaped preform is built up with the skin panel centered on the flat cure tool, the peel ply is removed from the center 11,43 cm (4.5 inch) width to expose highly bondable epoxy surface and one strip of AF191 is applied to the center of peeled section. The pi-joint assembly is centered on the AF191 and pressed to adhere. The first 6,35 cm (2.5 inch) of the web panel to be bonded into the pi-joint is peeled on both faces for adhesive application. The second strip of AF191 adhesive is folded in half and wrapped around the peeled web before insertion into the clevis of the pi-shaped preform. The webs are attached to vertical, articulating tool bars which maintain 90 degree orientation to the skin panel and has force application threaded fasteners to pull the web into the tight clevis. Composite shims equal to the estimated stack-up height of the skin, adhesives and joint stacks of the base and legs of the pi-shaped preform are inserted under the excess web length and the tool pull fasteners used to pull them tight establishing proper joint geometry and per ply thickness. The assembled "T" panel joint component is bagged using industry standard materials and silicone over-presses to maintain formed geometry during cure. Teflon film inserts are used to prevent bonding in "T" panel areas which will be removed for shear coupon machining. The joint was cured for 2 hrs. at 180 degrees centigrade and 620528 Pa (90 psi).

### Comparative Sample A:

A 3D woven pi-preform was fabricated using a IM7 3D woven preform (LMdrwg #LMA-MB0031, style A1111). The 3D woven pi-preform was infiltrated with Solvay 977-3 epoxy resin. A pi-joint assembly was assembled using the 3D woven pi-preform along with a composite skin and web laminate composed of Solvay IM7-977-3 epoxy resin prepreg that was assembled and cured. The 0,421 cm (0.166 inch) thick, fabric reinforced web panel and the 0,675 cm (0.266 inch) thick, uni-tape with fabric outer ply reinforced skin utilized a quasi-isotropic prepreg stack sequence with outer peel plies of glass fabric/ 977-3 epoxy. Cured panels were cut to 17,78 cm ( 7") wide and 93,98 cm (37 inch) length (web) and 91,44 cm (36 inch) length (skin). The web edge to be bonded was rounded slightly to better match the clevis geometry. 10,16 cm (4 inch) by 91,44 cm (36 inch) strips of 3M AF191 3,83 Pa ( 0.08 pound/square foot ) adhesive with a knitted carrier were cut to cover the interior clevis and bottom base surfaces with excess width to supply excess adhesive to the joint end of part areas. The 3D woven pi-preform is built up with the skin panel centered on the flat cure tool, the peel ply is removed from the center 11,43 cm (4.5 inch) width to expose highly bondable epoxy surface and one strip of AF191 is applied to the center of peeled section. The pi-joint assembly is centered on the AF191 and pressed to adhere. The first 6,35 cm (2.5 inch) of the web panel to be bonded into the pi-joint is peeled on both faces for adhesive application. The second strip of AF191 adhesive is folded in half and wrapped around the peeled web before insertion into the clevis of the 3D woven pi-preform. The webs are attached to vertical, articulating tool bars which maintain 90 degree orientation to the skin panel and has force application threaded fasteners to pull the web into the tight clevis. Composite shims equal to the estimated stack-up height of the skin, adhesives and joint stacks of the base and legs of the 3D woven pi-preform are inserted under the excess web length and the tool pull fasteners used to pull them tight establishing proper j oint geometry and per ply thickness. The assembled "T" panel joint component is bagged using industry standard materials and silicone over-presses to maintain formed geometry during cure. Teflon film inserts are used to prevent bonding in "T" panel areas which will be removed for shear coupon machining. The joint was cured for 2 hrs. at 180 degrees centigrade and 620528 Pa (90 psi).

### Shear Strength Test:

Shear strength testing is performed with Example 1 and Comparative Sample A. Shear strength testing is performed by pulling the web panel out of the bonded pi-joint along the axial length of the joint. The test fixture maintains alignment, coupling the test coupon to the test frame grips. Ultimate strength and load vs strength are recorded. Example 1 exhibited exceedingly high shear strength. Specifically, Example 1 exhibited ~220% shear strength compared to Comparative Sample A.

### Pull-off Strength Test:

Pull-off strength testing is performed with Example 1 and Comparative Sample A. Pull-off strength testing is performed by pulling the web normally out of the joint with test frame gripping the web and the skin supported by rods. Ultimate strength and load vs strength are recorded. Example 1 exhibited comparable pull-off strength compared to Comparative Sample A. Specifically, Example 1 exhibited ~85% pull-off strength compared to Comparative Sample A.

Despite being a low cost altemative compared to Comparative Sample A, Example 1 provides improved shear strength and comparable pull-off performance.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. A pi-shaped preform comprising:
a base component; and
a pair of axially elongated legs coupled to the base component to define a channel between the axially elongated legs, the pair of axially elongated legs comprising plies of prepreg oriented in a ply stack,
**characterized in that** at least a portion of the prepreg comprises discontinuous, aligned fibers, wherein individual plies of prepreg oriented in the ply stack at an angle of 0 degrees or 90 degrees relative to a first axis comprise continuous, aligned fibers, and individual plies of prepreg oriented in the ply stack at an angle other than 0 degrees or 90 degrees relative to the first axis comprise discontinuous, aligned fibers.

2. The pi-shaped preform of claim 1, wherein the pair of axially elongated legs include a U-shaped component coupled to a first L-shaped component and a second **L-**component, the second L-shaped component positioned opposite the first L-shaped component; and/or
wherein the prepreg comprises a polymer matrix material having the discontinuous, aligned fibers embedded therein.

3. The pi-shaped preform of claim 2 further comprising:
(a) a filler positioned within at least one of:
(i) a first space formed between the U-shaped component and the first L-shaped component, and
(ii) a second space formed between the U-shaped component and the second **L-**shaped component; and/or
(b) an adhesive that couples at least one of:
(i) the U-shaped component to the first L-shaped component;
(ii) the U-shaped component and the second L-shaped component;
(iii) the first L-shaped component and the base component; and
(iv) the second L-shaped component and the base component.

4. The pi-shaped preform of claim 2 or claim 3, wherein the polymer matrix material is selected from a thermoplastic resin, a thermoset resin, or combinations thereof.

5. The pi-shaped preform of any of claims 1-4, wherein the discontinuous, aligned fibers are selected from carbon fibers, glass fibers, aramid fibers, graphite fibers, boron fibers, or combinations thereof, and, optionally or preferably,
wherein the discontinuous, aligned fibers in a second ply adjacent to the individual ply in the plies of prepreg are aligned along a second axis that is positioned at an angle to the first axis

6. The pi-shaped preform of any of claims 1-5, wherein the discontinuous, aligned fibers in an individual ply in the plies of prepreg are aligned along a first axis, wherein the discontinuous, aligned fibers in the individual ply are aligned at an angle of less than 5 degrees from the first axis.

7. The pi-shaped preform of any of claims 1-6, wherein each individual ply in the plies of prepreg comprises discontinuous, aligned fibers.

8. A pi-joint assembly comprising:
pi-shaped preform according to claim 1;
a first material coupled to the base component; and
a second material coupled to an inner surface of the channel between the axially elongated legs.

9. The pi-joint assembly of claim 8 further comprising an adhesive that couples (i) the first material to the base component; and (ii) the second material to the axially elongated legs.

10. The pi-joint assembly of claim 8 or claim 9, wherein the prepreg comprises a polymer matrix material having the discontinuous, aligned fibers embedded therein; and/or
wherein the discontinuous, aligned fibers in an individual ply in the plies of prepreg are aligned along a first axis, wherein the discontinuous, aligned fibers in the individual ply are aligned at an angle of less than 5 degrees from the first axis.

11. The pi-joint assembly of any of claims 8-10, wherein the discontinuous, aligned fibers in a second ply adjacent to the individual ply in the plies of prepreg are aligned along a second axis that is positioned at an angle to the first axis, and, optionally or preferably,
wherein the discontinuous, aligned fibers in an individual ply in the plies of prepreg are aligned along a first axis, wherein the discontinuous, aligned fibers in the individual ply are aligned at an angle of less than 5 degrees from the first axis.

12. A method of manufacturing a pi-shaped preform comprising:
laying plies of prepreg in a ply stack for a base component and a pair of axially elongated legs;
thermal forming the plies of prepreg in a shape of the base component and the pair of axially elongated legs; and
bonding the pair of axially elongated legs to the base component to form the pi-shaped preform,
**characterized in that** at least a portion of the prepreg comprises discontinuous, aligned fibers, wherein individual plies of prepreg oriented in the ply stack at an angle of 0 degrees or 90 degrees relative to a first axis comprise continuous, aligned fibers, and individual plies of prepreg oriented in the ply stack at an angle other than 0 degrees or 90 degrees relative to the first axis comprise discontinuous, aligned fibers.

13. The method of claim 12 further comprising:
laying plies of prepreg in the ply stack for a U-shaped component, a first **L-**shaped component, and a second L-shaped component;
thermal forming the plies of prepreg in a shape of the U-shaped component, the first L-shaped component, and the second L-shaped component;
positioning a filler in a first space between the U-shaped component and the first L-shaped component, and a second space between the U-shaped component the second L-shaped component; and
bonding the first L-shaped component, the U-shaped component, the second **L-**shaped component, and the base component to form the pi-shaped preform.

14. The method of claim 12 or claim 13, wherein bonding includes curing an adhesive positioned between at least one of: (i) the U-shaped component and the first L-shaped component; (ii) the U-shaped component and the second L-shaped component; (iii) the first L-shaped component and the base component; and (iv) the second L-shaped component and the base component.

## Patentansprüche

1. Pi-förmiger Vorformling, umfassend:
eine Basiskomponente; und
ein Paar axial verlängerter Schenkel, die an die Basiskomponente gekoppelt sind, um einen Kanal zwischen den axial verlängerten Schenkeln zu definieren, das Paar axial verlängerter Schenkel umfassend Lagen von Prepreg, die in einem Lagenstapel ausgerichtet sind,
**dadurch gekennzeichnet, dass** mindestens ein Abschnitt des Prepregs diskontinuierliche, ausgerichtete Fasern umfasst, wobei einzelne Lagen von Prepreg, die in dem Lagenstapel in einem Winkel von 0 Grad oder 90 Grad in Bezug auf eine erste Achse ausgerichtet sind, kontinuierliche, ausgerichtete Fasern umfassen und einzelne Lagen von Prepreg, die in dem Lagenstapel in einem anderen Winkel als 0 Grad oder 90 Grad in Bezug auf der ersten Achse ausgerichtet sind, diskontinuierliche, ausgerichtete Fasern umfassen.

2. Pi-förmiger Vorformling nach Anspruch 1, wobei das Paar axial verlängerter Schenkel eine U-förmige Komponente beinhaltet, die an eine erste L-förmige Komponente und eine zweite L-Komponente gekoppelt ist, wobei die zweite L-förmige Komponente gegenüber der ersten L-förmigen Komponente positioniert ist; und/oder
wobei das Prepreg ein Polymermatrixmaterial umfasst, in dem die diskontinuierlichen, ausgerichteten Fasern eingebettet sind.

3. Pi-förmiger Vorformling nach Anspruch 2, ferner umfassend:
(a) einen Füllstoff, der in mindestens einem von Folgendem positioniert ist:
(i) einem ersten Raum, der zwischen der U-förmigen Komponente und der ersten L-förmigen Komponente gebildet ist, und
(ii) einem zweiten Raum, der zwischen der U-förmigen Komponente und der zweiten L-förmigen Komponente gebildet ist; und/oder
(b) einen Klebstoff, der mindestens eines von Folgenden koppelt:
(i) die U-förmige Komponente an der ersten L-förmigen Komponente;
(ii) die U-förmige Komponente und die zweite L-förmige Komponente;
(iii) die erste L-förmige Komponente und die Basiskomponente; und
(iv) die zweite L-förmige Komponente und die Basiskomponente.

4. Pi-förmiger Vorformling nach Anspruch 2 oder Anspruch 3, wobei das Polymermatrixmaterial ausgewählt ist aus einem thermoplastischen Harz, einem duroplastischen Harz oder Kombinationen davon.

5. Pi-förmiger Vorformling nach einem der Ansprüche 1-4, wobei die diskontinuierlichen, ausgerichteten Fasern ausgewählt sind aus Kohlenstofffasern, Glasfasern, Aramidfasern, Graphitfasern, Borfasern oder Kombinationen davon und, optional oder vorzugsweise
wobei die diskontinuierlichen, ausgerichteten Fasern in einer zweiten Lage angrenzend an die einzelnen Lage in den Lagen des Prepregs entlang einer zweiten Achse ausgerichtet sind, die in einem Winkel zu der ersten Achse positioniert ist

6. Pi-förmiger Vorformling nach einem der Ansprüche 1-5, wobei die diskontinuierlichen, ausgerichteten Fasern in einer einzelnen Lage in den Lagen des Prepregs entlang einer ersten Achse ausgerichtet sind, wobei die diskontinuierlichen, ausgerichteten Fasern in der einzelnen Lage in einem Winkel von weniger als 5 Grad von der ersten Achse ausgerichtet sind.

7. Pi-förmiger Vorformling nach einem der Ansprüche 1-6, wobei jede einzelne Lage in den Lagen des Prepregs diskontinuierliche, ausgerichtete Fasern umfasst.

8. Pi-Verbindungsanordnung, umfassend:
Pi-förmigen Vorformling nach Anspruch 1;
ein erstes Material, das an die Basiskomponente gekoppelt ist; und
ein zweites Material, das an eine Innenfläche des Kanals zwischen den axial verlängerten Schenkeln gekoppelt ist.

9. Pi-Verbindungsanordnung nach Anspruch 8, ferner umfassend einen Klebstoff, der (i) das erste Material an die Basiskomponente koppelt; und (ii) das zweite Material an die axial verlängerten Schenkel koppelt.

10. Pi-Verbindungsanordnung nach Anspruch 8 oder Anspruch 9, wobei das Prepreg ein Polymermatrixmaterial umfasst, in dem die diskontinuierlichen, ausgerichteten Fasern eingebettet sind; und/oder
wobei die diskontinuierlichen, ausgerichteten Fasern in einer einzelnen Lage in den Lagen des Prepregs entlang einer ersten Achse ausgerichtet sind, wobei die diskontinuierlichen, ausgerichteten Fasern in der einzelnen Lage in einem Winkel von weniger als 5 Grad von der ersten Achse ausgerichtet sind.

11. Pi-Verbindungsanordnung nach Anspruch 8-10, wobei die diskontinuierlichen, ausgerichteten Fasern in einer zweiten Lage angrenzend an die einzelnen Lage in den Lagen des Prepregs entlang einer zweiten Achse ausgerichtet sind, die in einem Winkel zu der ersten Achse positioniert ist, und optional oder vorzugsweise
wobei die diskontinuierlichen, ausgerichteten Fasern in einer einzelnen Lage in den Lagen des Prepregs entlang einer ersten Achse ausgerichtet sind, wobei die diskontinuierlichen, ausgerichteten Fasern in der einzelnen Lage in einem Winkel von weniger als 5 Grad von der ersten Achse ausgerichtet sind.

12. Verfahren zum Herstellen eines Pi-förmigen Vorformlings, umfassend:
Legen von Lagen von Prepreg in einem Lagenstapel für eine Basiskomponente und ein Paar axial verlängerter Schenkel;
Thermoformen der Lagen aus Prepreg in einer Form der Basiskomponente und des Paars von axial verlängerten Schenkeln; und
Verbinden des Paars axial verlängerter Schenkel mit der Basiskomponente, um den Pi-förmigen Vorformling zu bilden,
**dadurch gekennzeichnet, dass** mindestens ein Abschnitt des Prepregs diskontinuierliche, ausgerichtete Fasern umfasst, wobei einzelne Lagen von Prepreg, die in dem Lagenstapel in einem Winkel von 0 Grad oder 90 Grad in Bezug auf eine erste Achse ausgerichtet sind, kontinuierliche, ausgerichtete Fasern umfassen und einzelne Lagen von Prepreg, die in dem Lagenstapel in einem anderen Winkel als 0 Grad oder 90 Grad in Bezug auf der ersten Achse ausgerichtet sind, diskontinuierliche, ausgerichtete Fasern umfassen.

13. Verfahren nach Anspruch 12, das ferner Folgendes umfasst:
Legen von Lagen von Prepreg in den Lagenstapel für eine U-förmige Komponente, eine erste L-förmige Komponente und eine zweite L-förmige Komponente;
Thermoformen der Lagen aus Prepreg in einer Form der U-förmigen Komponente, der ersten L-förmigen Komponente und der zweiten L-förmigen Komponente;
Positionieren eines Füllstoffs in einem ersten Raum zwischen der U-förmigen Komponente und der ersten L-förmigen Komponente und einem zweiten Raum zwischen der U-förmigen Komponente und der zweiten L-förmigen Komponente; und
Verbinden der ersten L-förmigen Komponente, der U-förmigen Komponente, der zweiten L-förmigen Komponente und der Basiskomponente, um den Pi-förmigen Vorformling zu bilden.

14. Verfahren nach Anspruch 12 oder Anspruch 13, wobei ein Binden ein Aushärten eines Klebstoffs beinhaltet, der zwischen mindestens einem von Folgendem positioniert ist: (i) der U-förmigen Komponente und der ersten L-förmigen Komponente; (ii) der U-förmigen Komponente und der zweiten L-förmigen Komponente; (iii) der ersten L-förmigen Komponente und der Basiskomponente; und (iv) der zweiten L-förmigen Komponente und der Basiskomponente.

## Revendications

1. Préforme en pi comprenant :
un composant de base ; et
une paire de pattes allongées axialement couplées au composant de base pour définir un canal entre les pattes allongées axialement, la paire de pattes allongées axialement comprenant des couches de préimprégné orientées dans une pile de couches,
**caractérisée en ce qu'**au moins une partie du préimprégné comprend des fibres discontinues alignées, dans laquelle des couches individuelles de préimprégné orientées dans la pile de couches selon un angle de 0 degré ou 90 degrés par rapport à un premier axe comprennent des fibres alignées continues,
et des couches individuelles de préimprégné orientées dans la pile de couches suivant un angle autre que 0 degré ou 90 degrés par rapport au premier axe comprennent des fibres discontinues alignées.

2. Préforme en pi selon la revendication 1, dans laquelle la paire de pattes allongées axialement inclut un composant en U couplé à un premier composant en L et à un second composant en L, le second composant en L étant positionné à l'opposé du premier composant en L ; et/ou
dans laquelle le préimprégné comprend un matériau de matrice polymère dans lequel sont incorporées les fibres discontinues alignées.

3. Préforme en pi selon la revendication 2, comprenant en outre :
(a) une charge positionnée dans au moins l'un parmi :
(i) un premier espace formé entre le composant en U et le premier composant en L, et
(ii) un second espace formé entre le composant en U et le second composant en L ; et/ou
(b) un adhésif qui couple au moins l'un parmi :
(i) le composant en U au premier composant en L ;
(ii) le composant en U et le second composant en L ;
(iii) le premier composant en L et le composant de base ; et
(iv) le second composant en L et le composant de base.

4. Préforme en pi selon la revendication 2 ou la revendication 3, dans laquelle le matériau de matrice polymère est choisi parmi une résine thermoplastique, une résine thermodurcissable ou des combinaisons de celles-ci.

5. Préforme en pi selon l'une quelconque des revendications 1-4, dans laquelle les fibres discontinues alignées sont choisies parmi des fibres de carbone, des fibres de verre, des fibres d'aramide, des fibres de graphite, des fibres de bore ou des combinaisons de celles-ci, et, éventuellement ou de préférence,
dans laquelle les fibres discontinues alignées dans une seconde couche adjacente à la couche individuelle dans les couches de préimprégné sont alignées le long d'un second axe qui est positionné selon un angle par rapport au premier axe.

6. Préforme en pi selon l'une quelconque des revendications 1-5, dans laquelle les fibres discontinues alignées dans une couche individuelle dans les couches de préimprégné sont alignées le long d'un premier axe, dans laquelle les fibres discontinues alignées dans la couche individuelle sont alignées selon un angle inférieur à 5 degrés par rapport au premier axe.

7. Préforme en pi selon l'une quelconque des revendications 1-6, dans laquelle chaque couche individuelle dans les couches de préimprégné comprend des fibres discontinues alignées.

8. Ensemble joint en pi comprenant :
une préforme en pi selon la revendication 1 ;
un premier matériau couplé au composant de base ; et
un second matériau couplé à une surface intérieure du canal entre les pattes allongées axialement.

9. Ensemble joint en pi selon la revendication 8, comprenant en outre un adhésif qui couple (i) le premier matériau au composant de base ; et (ii) le second matériau aux pattes allongées axialement.

10. Ensemble joint en pi selon la revendication 8 ou la revendication 9, dans lequel le préimprégné comprend un matériau de matrice polymère dans lequel sont incorporées les fibres discontinues alignées ; et/ou
dans lequel les fibres discontinues alignées dans une couche individuelle dans les couches de préimprégné sont alignées le long d'un premier axe, dans lequel les fibres discontinues alignées dans la couche individuelle sont alignées selon un angle inférieur à 5 degrés par rapport au premier axe.

11. Ensemble joint en pi selon l'une quelconque des revendications 8-10, dans lequel les fibres discontinues alignées dans une seconde couche adjacente à la couche individuelle dans les couches de préimprégné sont alignées le long d'un second axe qui est positionné selon un angle par rapport au premier axe, et, éventuellement ou de préférence,
dans lequel les fibres discontinues alignées dans une couche individuelle dans les couches de préimprégné sont alignées le long d'un premier axe, dans lequel les fibres discontinues alignées dans la couche individuelle sont alignées selon un angle inférieur à 5 degrés par rapport au premier axe.

12. Procédé de fabrication d'une préforme en pi comprenant :
la disposition de couches de préimprégné dans un pile de couches pour un composant de base et une paire de pattes allongées axialement ;
le thermoformage des couches de préimprégné sous forme du composant de base et de la paire de pattes allongées axialement ; et
la liaison de la paire de pattes allongées axialement au composant de base pour former la préforme en pi,
**caractérisée en ce qu'**au moins une partie du préimprégné comprend des fibres discontinues alignées, dans laquelle des couches individuelles de préimprégné orientées dans la pile de couches selon un angle de 0 degré ou 90 degrés par rapport à un premier axe comprennent des fibres alignées continues, et des couches individuelles de préimprégné orientées dans la pile de couches suivant un angle autre que 0 degré ou 90 degrés par rapport au premier axe comprennent des fibres discontinues alignées.

13. Procédé selon la revendication 12, comprenant en outre :
la disposition de couches de préimprégné dans la pile de couches pour un composant en U, un premier composant en L et un second composant en L ;
le thermoformage des couches de préimprégné sous forme du composant en U, du premier composant en L et du second composant en L ;
le positionnement d'une charge dans un premier espace entre le composant en U et le premier composant en L, et un second espace entre le composant en U et le second composant en L ; et
la liaison du premier composant en L, du composant en U, du second composant en L et du composant de base pour former la préforme en pi.

14. Procédé selon la revendication 12 ou la revendication 13, dans lequel la liaison inclut le durcissement d'un adhésif positionné entre au moins l'un parmi : (i) le composant en U et le premier composant en L ; (ii) le composant en U et le second composant en L ; (iii) le premier composant en L et le composant de base ; et (iv) le second composant en L et le composant de base.
